# EUROPÄISCHE PATENTANMELDUNG

(11) **EP 3 772 206 A1**
(43) Veröffentlichungstag der Anmeldung: **03.02.2021**
(21) Anmeldenummer: 19189375.9
(22) Anmeldetag: 31.07.2019
(51) Int. Cl.: H04L 29/06

(54) **NETZWERKADAPTER ZUR UNIDIREKTIONALEN ÜBERTRAGUNG VON DATEN**

(71) Anmelder: Siemens Aktiengesellschaft, 80333 München (DE)
(72) Erfinder: Falk, Rainer, 85586 Poing (DE); Seltzsam, Stefan, 85653 Aying (DE); Seuschek, Hermann, 81373 München (DE); Wimmer, Martin, 85579 Neubiberg (DE)

(57) **Zusammenfassung**

Netzwerkadapter (20, 40) zur unidirektionalen Übertragung eines Nutzdatenstroms an eine bidirektionale Netzwerkschnittstelle, aufweisend
- eine erste Anschlusseinheit (21, 41), die mit einer bidirektionalen Netzwerkschnittstelle (11) eines ersten Gerätes (10) physisch verbindbar ist,
- eine zweite Anschlusseinheit (24, 44), die mit einer bidirektionalen Netzwerkschnittstelle (31) eines zweiten Gerätes (30) physisch verbindbar ist, und
- eine Terminierungseinheit (22, 42), die mindestens eine Bitübertragungsbaugruppe (23, 43) aufweist, und die derart konfiguriert ist, eine bidirektionale Datenverbindung (14) zur Netzwerkschnittstelle (11) des ersten Geräts (10) aufzubauen, den Nutzdatenstrom ausschließlich unidirektional über die Datenverbindung (14) vom ersten Gerät (10) zu empfangen und keinen Nutzdatenstrom an das erste Gerät (10) zu senden.

## Beschreibung

Die Erfindung betrifft einen Netzwerkadapter zur unidirektionalen Übertragung eines Datenstroms an eine bidirektionale Netzwerkschnittstelle.

Heutige Industrieanlagen, Verkehrssicherungsnetze oder auch Energieverteilungsnetze umfassen eine Vielzahl von Geräten, die Daten, beispielsweise über den Zustand des Gerätes oder Diagnosedaten, über ein Kommunikationsnetz miteinander austauschen oder an zentrale Steuerungs- oder Überwachungsserver übertragen. Solche Geräte werden häufig als Internet-of-Things Geräte, kurz IoT Geräte oder als "Internet-der-Dinge" Geräte, bezeichnet. Daten, beispielsweise aus Industrieanlagen, sollen zur Analyse geschützt an einen Internet-of-Things-Server, der entweder nahe der Industrieanlage oder in ein entfernt angeordnetes gemeinschaftlich genutztes Server-system, auch als Cloud bezeichnet, übertragen werden. Die Daten können dort beispielsweise ausgewertet werden, um zukünftige Defekte rechtzeitig zu erkennen, um Maschinenparameter zu optimieren oder um Angriffe oder Manipulationen der Industrieanlage zu erkennen. Aus Kostengründen wird dabei in der Regel für die Datenübertragung ein öffentliches Netz, beispielsweise das Internet, oder ein Büronetzwerk oder Fabriknetz verwendet.

Eine wichtige Sicherheitsanforderung besteht darin, dass beispielsweise ein Automatisierungsnetz nicht von außen, beispielsweise vom Internet aus, angegriffen oder beeinflusst werden kann. Dies ist insbesondere deshalb wichtig, da manche Automatisierungsnetzwerke spezielle Echtzeit- und Betriebssicherheits-Anforderungen erfüllen müssen. Zudem sind in manchen Automatisierungsnetzwerken Altgeräte mit unzureichendem Zugriffsschutz im Einsatz und die Betriebssicherheit oftmals über eine strikte Netzisolation, auch als Perimeterschutz bezeichnet, realisiert. Dies bedeutet, dass eine direkte, bidirektionale Anbindung von Geräten an externe Systeme nicht möglich ist, da hierdurch das Schutzniveau der Anlagennetze gefährdet ist.

Bekannt sind Datendioden oder Einweg-Gateways, die eine rückwirkungsfreie Anbindung eines Anlagennetzwerks an ein externes bzw. öffentliches Netzwerk ermöglichen. Durch ein solches Einweg-Gateway wird gewährleistet, dass nur Daten aus der Industrieanlage, die eine Netzwerkzone mit hoher Sicherheitsrelevanz darstellt, heraus übertragen werden können. Eine Übertragung von Daten vom externen Netz, das eine Netzwerkzone mit eventuell geringerer Sicherheitsrelevanz darstellt, in das Anlagennetz ist weder direkt möglich, noch sollten Daten aus Signalisierungsprotokollen oder anderweitigen Datenquellen vom externen Netzwerk in das Anlagennetz eingebracht werden können. Durch diese strikte Datenflusskontrolle wird verlässlich verhindert, dass von einem externen Netzwerk aus, der Betrieb der Industrieanlage beeinflusst oder beeinträchtigt werden kann.

Aktuell angebotene Einweg-Gateways sind, je nach Einsatzgebiet, teure Netzwerkkomponenten, die üblicherweise von Komponenten für den Militär- oder Behördeneinsatz abgeleitet werden. Die hohen Kosten verhindern einen wünschenswerten breiten Einsatz in Industrienetzwerken. Die EP 3207683 beschreibt beispielsweise ein solches Verfahren und eine solche Vorrichtung zum rückwirkungsfreien Erfassen von Daten in einer sicherheitskritischen Netzwerkzone und ein Übertragen der Daten in eine Netzwerkzone mit geringer Sicherheitsanforderung.

Des Weiteren besteht der Bedarf, vorhandene Netzwerkkomponenten, wie beispielsweise Daten-Gateways zu Cloud-Servern, um eine Einweg-Übertragungsfunktionalität zu erweitern.

Es ist somit die Aufgabe der vorliegenden Erfindung, eine sichere, strikt unidirektionale Datenübertragung von einer sicherheitskritischen, beispielsweise geschlossenen Netzwerkzonen an eine öffentliche Netzwerkzone, an eine Netzwerkzone mit geringerer Sicherheitsrelevanz, beispielsweise an ein Cloud-Server-System, mit möglichst einfachen und kostengünstigen Mitteln zu ermöglichen. Dabei sollen bestehende Netzwerkkomponenten weiterverwendet werden können und mit möglichst geringem Aufwand dennoch eine Einwegkommunikation sichergestellt sein.

Gemäß einem ersten Aspekt betrifft die Erfindung einen Netzwerkadapter zur unidirektionalen Übertragung eines Nutzdatenstroms an eine bidirektionale Netzwerkschnittstelle, aufweisend eine erste Anschlusseinheit, die mit einer bidirektionalen Netzwerkschnittstelle eines ersten Geräts physisch verbindbar ist, eine zweite Anschlusseinheit, die mit einer bidirektionalen Netzwerkschnittstelle eines zweiten Geräts physisch verbindbar ist, und eine Terminierungseinheit, die mindestens eine Bitübertragungsbaugruppe aufweist, und die derart konfiguriert ist, eine bidirektionale Datenverbindung zur Netzwerkschnittstelle des ersten Geräts aufzubauen, den Nutzdatenstrom ausschließlich unidirektional über die Datenverbindung vom ersten Gerät zu empfangen und keine Nutzdaten an das erste Gerät zu senden.

Die bidirektionale Datenverbindung zur Netzwerkschnittstelle des ersten Geräts kann insbesondere ein bidirektionaler Physical Layer Link sein, z.B. Ethernet PHY. Er wird bidirektional aufgebaut, sodass das erste Gerät eine aufgebaute bidirektionale Verbindung erkennt und diese dadurch aktivieren kann. Obwohl das erste Gerät eine bidirektionale Datenverbindung erkennt, ist jedoch trotzdem nur eine unidirektionale Übertragung von Nutzdaten möglich.

Durch den Netzwerkadapter ist eine kostengünstige und technisch minimalistische Realisierung eines Einweg-Gateways geschaffen, bei der Rückwirkungsfreiheit auf das angeschlossene erste Gerät dadurch sichergestellt wird, dass die bidirektionale Datenverbindung ausschließlich den Nutzdatenstrom vom ersten Gerät empfängt, aber keinen Nutzdatenstrom an das erste Gerät sendet. Die Rückwirkungsfreiheit wird dabei durch Hardware-Maßnahmen erzwungenen. Der Netzwerkadapter kann mit einem beliebigen ersten Gerät, das in der sicherheitsrelevanten Netzwerkzone angeordnet ist und eine herkömmliche bidirektionalen Netzwerkschnittstelle aufweist, verwendet werden. Somit können Daten von dem ersten Gerät in einer sicherheitskritischen Netzwerkzone an ein zweites Gerät, das in einer Zone mit geringerer Sicherheitsrelevanz angeordnet ist, übermittelt werden. Dabei wird den beiden verbundenen Netzwerkschnittstellen des ersten und zweiten Gerätes vorgetäuscht, dass eine herkömmliche bidirektionale Datenverbindung physikalisch besteht. Andernfalls würden diese Netzwerkschnittstellen einen Fehler erkennen beziehungsweise sie würden nicht erkennen, dass ein Übertragungsmedium, beispielsweise ein Netzwerkkabel, verbunden ist. Die Terminierungseinheit weist dafür speziell eine Bitübertragungsbaugruppe auf, die eine bidirektionale Netzwerkstelle auf physikalischer Ebene terminiert, d.h. mit der bidirektionalen Netzwerkschnittstelle des beispielsweise ersten Gerätes eine herkömmliche bidirektionale Verbindung aufbauen kann. Dennoch können Datenpakete nur unidirektional übertragen werden. Eine Terminierung auf physikalische Ebene bezeichnet dabei eine Durchführung von Aufgaben und den Austausch von Information entsprechend einer ersten Schicht, auch als Bitübertragungsschicht oder Physical Layer bezeichnet, eines Verbindungsmodells für offene Systeme, das durch die Internationale Telekommunikationsunion ITU-T standardisiert ist und kurz als OSI-Referenzmodell bezeichnet wird.

In einer vorteilhaften Ausführungsform weist die Terminierungseinheit eine erste Bitübertragungsbaugruppe auf, die die bidirektionale Datenverbindung in Bezug auf einen Bitübertragungsmodus terminiert und eine Medien-abhängige und eine Medien-unabhängige Schnittstelle aufweist.

Die erste Bitübertragungsbaugruppe kann derart konfiguriert sein, dass entweder die Medien-abhängige Schnittstelle oder die Medien-unabhängige Schnittstelle für die unidirektionale Datenübertragung verwendet wird. Die Bitübertragungsbaugruppe kann an ihren Schnittstellen zur Übertragung des Nutzdatenstroms unterschiedlich geschaltet werden und bietet so eine Eingriffsmöglichkeit auf die Übertragungsrichtung der Datenverbindung. Die Bitübertragungsbaugruppe ist in bevorzugter Weise als integrierter Schaltkreis ausgebildet.

In einer vorteilhaften Ausführungsform ist lediglich die Medien-abhängige Schnittstelle bei einer ersten Bitübertragungsbaugruppe beschaltet und die Medien-abhängige Schnittstelle ist derart konfiguriert, die Datenverbindung entsprechend einem vorgegebenen Typ eines Übertragungsmediums der bidirektionalen Datenverbindung zu terminieren.

Dies hat den Vorteil, dass der Netzwerkadapter für den vorgegebenen Typ eines Übertragungsmediums der bidirektionalen Datenverbindung vorkonfiguriert vorliegt und ohne weitere Konfiguration funktionsfähig ist.

In einer vorteilhaften Ausführungsform ist die Medien-unabhängige Schnittstelle der ersten Bitübertragungsbaugruppe nicht beschaltet.

Somit ist die Datenverbindung an dieser Stelle terminiert und es können keine Daten von der Bitübertragungsbaugruppe an das erste Gerät gesendet werden. Insbesondere werden auf der Medien-abhängigen Schnittstelle die Eigenschaften der Datenverbindung entsprechend der Gegenstelle und dem Typ des angeschlossenen Übertragungsmediums durch Signale, die zwischen der Bitübertragungsbaugruppe im Netzwerkadapter und der ersten Netzwerkschnittstelle im ersten Gerät ausgetauscht werden, vereinbart. Die Rückwirkungsfreiheit der Verbindung zwischen Netzwerkadapter und dem ersten Gerät ist sichergestellt.

In einer vorteilhaften Ausführungsform wird der Nutzdatenstrom zwischen der ersten Anschlusseinheit und der Terminierungseinheit ausgekoppelt und an die zweite Anschlusseinheit ausgegeben.

Das Auskoppeln des Nutzdatenstroms bezeichnet dabei ein passives Übertragen bzw. Auslesen des Nutzdatenstroms aus einem Bereich der Datenverbindung innerhalb des Netzwerkadapters. Der Nutzdatenstrom wird beispielsweise dupliziert, und der duplizierte Nutzdatenstrom wird an die Netzwerkschnittstelle des zweiten Gerätes übermittelt. Die Netzwerkschnittstelle im ersten Gerät sowie die Netzwerkschnittstelle der Bitübertragungsbaugruppe sind im sogenannten "Promiscuous Mode" konfiguriert. Der ursprüngliche Nutzdatenstrom wird an die Bitübertragungsbaugruppe weitergegeben und dort terminiert. Die Bitübertragungsbaugruppe terminiert somit die Datenverbindung im Netzwerkadapter.

In einer vorteilhaften Ausführungsform weist die Terminierungseinheit die erste und eine zweite Bitübertragungsbaugruppe auf, wobei die erste Bitübertragungsbaugruppe den Nutzdatenstrom unidirektional an die zweite Bitübertragungsbaugruppe übermittelt und die zweite Bitübertragungsbaugruppe eine zweite Datenverbindung zum zweiten Gerät terminiert.

Diese Ausführungsform hat den Vorteil, dass der Datenstrom aktiv weitergeleitet wird und somit eine Auswahl von nutzbaren Typen von Übertragungsmedien größer ist. Es werden somit zwei aktive Netzwerkverbindungen, zum einen von der ersten Bitübertragungsbaugruppe zur Netzwerkschnittstelle im ersten Gerät sowie eine zweite aktive Datenverbindung von der zweiten Bitübertragungsbaugruppe zur Netzwerkschnittstelle des zweiten Gerätes, aufgebaut.

In einer vorteilhaften Ausführungsform übermittelt die erste Bitübertragungsbaugruppe den Nutzdatenstrom über eine Medien-unabhängige Schnittstelle an die zweite Bitübertragungsbaugruppe.

Somit wird der Nutzdatenstrom lediglich von der ersten zur zweiten Bitübertragungsbaugruppe übermittelt. In Rückrichtung, von der zweiten zur ersten Bitübertragungsbaugruppe findet keine Übertragung des Nutzdatenstroms statt.

In einer vorteilhaften Ausführungsform vereinbart die erste Bitübertragungsbaugruppe einen Typ des Übertragungsmediums der bidirektionalen Datenverbindung mit dem ersten Gerät.

Dies hat den Vorteil, dass unterschiedliche Typen von Übertragungsmedien zwischen dem ersten Gerät und dem Netzwerkadapter, insbesondere der ersten Anschlusseinheit einsetzbar sind.

In einer vorteilhaften Ausführungsform vereinbart die zweite Bitübertragungsbaugruppe einen Typ eines Übertragungsmediums der bidirektionalen Datenverbindung mit dem zweiten Gerät und leitet den in der zweiten Bitübertragungsbaugruppe empfangenen Nutzdatenstrom an das zweite Gerät weiter.

Dies hat den Vorteil, dass unterschiedliche Typen von Übertragungsmedien zwischen dem Netzwerkadapter und dem zweiten Gerät verwendet werden können.

In einer vorteilhaften Ausführungsform ist die zweite Bitübertragungsbaugruppe derart konfiguriert, den Nutzdatenstrom von der ersten Bitübertragungsbaugruppe auf dem Medien-unabhängigen Interface zu empfangen und den Nutzdatenstrom von der Medien-unabhängige Schnittstelle an die Netzwerkschnittstelle des zweiten Gerätes, bevorzugt in einem promiskuitiven Modus, zu übermitteln.

Dies hat den Vorteil, dass lediglich Nutzdatenstrom über die medien-unabhängige Schnittstelle unidirektional übertragen wird. Die Medien-abhängige Schnittstelle der ersten Bitübertragungsbaugruppe und der zweiten Bitübertragungsbaugruppe sind nicht verbunden und somit entkoppelt und es kann kein Nutzdatenstrom zwischen der ersten und der zweiten Bitübertragungsbaugruppe auf Medien-abhängigen Schnittstellen übermittelt werden.

In einer vorteilhaften Ausführungsform weist der Netzwerkadapter eine Mediensteuerungseinheit auf, die die erste und/oder die zweite Bitübertragungsbaugruppe zur Bereitstellung des vorgegebenen oder des vereinbarten Typs des Übertragungsmediums konfiguriert.

Somit kann die Bitübertragungsbaugruppe einfach strukturiert aufgebaut sein, da Logik zur Einstellung und Anpassung an die unterschiedlichen Typen von Übertragungsmedien durch die Mediensteuerungseinheit durchgeführt werden.

In einer vorteilhaften Ausführungsform sind die erste und die zweite Anschlusseinheit als Steckverbinder zum Anschluss eines Übertragungsmediums ausgebildet. Der Steckverbinder kann ein Stecker, ein Steckadapter, oder ein Steckadapterkabel sein.

Somit kann der Netzwerkadapter einfach an ein vorhandenes Übertragungsmedium angeschlossen werden. Ein solcher Steckverbinder kann beispielsweise als Ethernet-Dose nach RJ-45 oder M12-Standard oder IEC 63171-2 (Single Pair Ethernet für Büroumgebung) oder IEC 63171-5 (Single Pair Ethernet für Industrieumgebung) ausgebildet sein und ein entsprechendes Ethernet-Kabel beziehungsweise dessen Stecker aufnehmen.

In einer vorteilhaften Ausführungsform umfasst der Netzwerkadapter zwei Übertragungsmedien, die mit der ersten und/oder der zweiten Anschlusseinheit fest verbunden sind.

Somit können Kombinationen aus Netzwerkadapter plus Übertragungsmedium fest vorkonfiguriert sein und somit ohne zusätzliche Übertragungsmedien an Geräte angeschlossen werden.

In einer vorteilhaften Ausführungsform terminiert die erste und/oder zweite Bitübertragungsbaugruppe die bidirektionale Datenverbindung in Bezug auf den Bitübertragungsmodus entsprechend einem Ethernet-Standard.

Der Ethernet-Standard, der vom Standardisierungsgremium IEEE mit der Nummer 802.3 standardisiert ist, wird weitverbreitet in der Netzwerktechnik verwendet. Ein entsprechender Netzwerkadapter deckt somit ein weites Einsatzfeld ab.

Die jeweilige "Einheit" kann hardwaretechnisch und/oder auch softwaretechnisch implementiert sein. Bei einer hardwaretechnischen Implementierung kann die jeweilige Einheit als Vorrichtung oder als Teil einer Vorrichtung ausgebildet sein. Der Netzwerkadapter und die enthaltenen Einheiten, insbesondere die Terminierungseinheit, können als integrierte Schaltkreise, als Mikroprozessoren oder als programmierbare Schaltungsbausteine ausgebildet sein. Bei einer softwaretechnischen Implementierung kann die jeweilige Einheit als Computerprogrammprodukt, als Funktion, als Routine, als Teil eines Programmcodes oder als ausführbares Objekt ausgebildet sein.

Ausführungsbeispiele des erfindungsgemäßen Netzwerkadapters sind in den Zeichnungen beispielhaft dargestellt und werden anhand der nachfolgenden Beschreibung näher erläutert. Es zeigen:
- Fig. 1: ein erstes Ausführungsbeispiel des erfindungsgemäßen Netzwerkadapters mit einem passiven Abgriff des Nutzdatenstroms in Blockdarstellung;
- Fig. 2: ein zweites Ausführungsbeispiel des erfindungsgemäßen Netzwerkadapters mit einem aktiven Abgriff des Nutzdatenstroms in Blockdarstellung; und
- Fig. 3: ein drittes Ausführungsbeispiel des erfindungsgemäßen Netzwerkadapters mit Übertragungsmedien in Blockdarstellung.

Einander entsprechende Teile sind in allen Figuren mit den gleichen Bezugszeichen versehen.

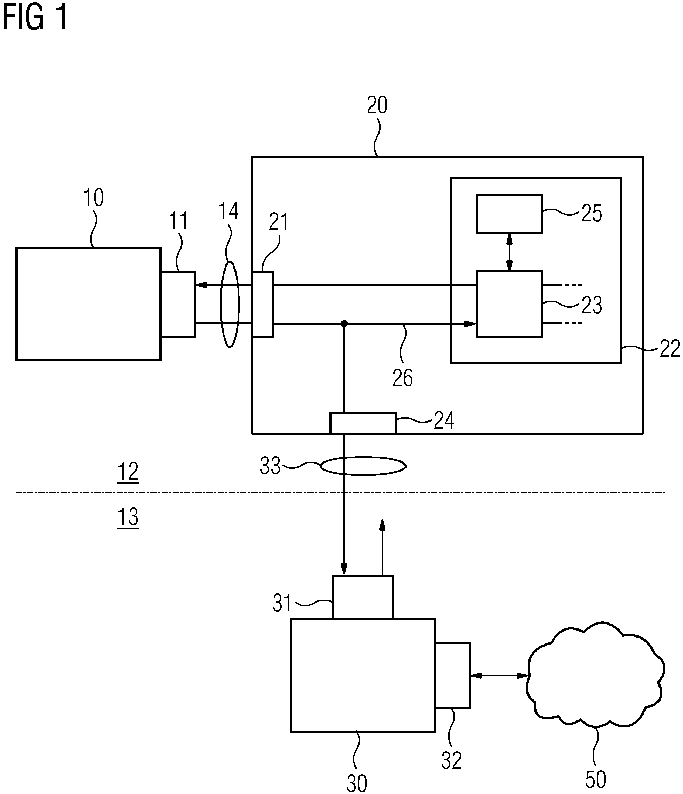

Figur 1 zeigt einen Netzwerkadapter 20, der eine erste Anschlusseinheit 21 aufweist, der mit einer bidirektionalen Netzwerkschnittstelle 11 eines ersten Gerätes 10 physisch verbindbar ist. Der Netzwerkadapter 20 weist des Weiteren eine zweite Anschlusseinheit 24 auf, die mit einer zweiten bidirektionalen Netzwerkschnittstelle 31 eines zweiten Gerätes 30 physisch verbindbar ist. Das erste Gerät 10 ist in einer sicherheitsrelevanten Netzwerkzone 12 angeordnet. Die erste Anschlusseinheit 21 bildet somit eine Schnittstelle zur sicherheitsrelevanten Netzwerkzone, beispielsweise einem Datennetzwerk einer Automatisierungsanlage oder einem Betriebssicherheitsnetzwerk aus. Das zweite Gerät 30 befindet sich in bevorzugter Weise in einer Netzwerkzone 13 mit geringer Sicherheitsrelevanz, beispielsweise einem Büronetzwerk oder einem öffentlichen Netzwerk, beispielsweise dem Internet. Das zweite Gerät 30 kann mit einer weiteren Netzwerkschnittstelle 32 mit einem Server 50, insbesondere einem Cloud-System verbunden sein.

Der Netzwerkadapter 20 umfasst des Weiteren eine Terminierungseinheit 22, die derart konfiguriert ist, eine bidirektionale Datenverbindung 14 zur Netzwerkschnittstelle 11 des ersten Gerätes 10 aufzubauen. Die Datenverbindung 14 wird beispielsweise über ein Netzwerkkabel, das mit der ersten Anschlusseinheit 21 sowie der Netzwerkschnittstelle 11 des ersten Gerätes 10 verbunden ist, realisiert. Eine Datenverbindung 33 wird über die zweite Anschlusseinheit 24 zur bidirektionalen Netzwerkschnittstelle des zweiten Gerätes 30 weitergeführt.

Die Terminierungseinheit 22 umfasst eine erste Bitübertragungsgruppe 23, die die bidirektionale Datenverbindung 14 in Bezug auf einen Bitübertragungsmodus terminiert. Somit ist eine aktive Datenverbindung 14 zwischen der ersten bidirektionalen Netzwerkschnittstelle 11 und der Bitübertragungsbaugruppe 23 aufgebaut. Der Bitübertragungsmodus umfasst Funktionen auf einer physikalischen Bitübertragungsschicht gemäß einem OSI-Referenzmodell. Diese Funktionen sind entsprechend dem verbundenen Übertragungsmedium festgelegt. Für Netzwerckabel entsprechend dem Ethernet-Standard sind die entsprechenden Funktionen im Standard 802.3 des Instituts für Elektrische und Elektronische Ingenieure IEEE festgelegt. Der Netzwerkadapter 20 ist jedoch nicht auf Übertragungsmedien entsprechend dem Ethernet-Standard, also Ethernet-Kabel, beschränkt. Es sind auch andere Übertragungsmedien nach anderen Standards mit der ersten und zweiten Anschlusseinheit 21, 24 verbindbar.

Die Bitübertragungsbaugruppe 23 weist eine medien-unabhängige Schnittstelle sowie eine medien-abhängige Schnittstelle auf. Über die medien-unabhängige Schnittstelle wird beispielsweise die physikalische Codierung der zu übertragenden Daten, beispielsweise die Taktfrequenz und Codierungsverfahren mit der gegenüberliegenden Netzwerkschnittstelle, hier Netzwerkschnittstelle 11 des ersten Gerätes, vereinbart. Die medien-abhängige Schnittstelle bildet die mechanische Verbindung der Bitübertragungsbaugruppe aus und ist mit der ersten Anschlusseinheit 21 verbunden.

In der vorliegenden Ausführungsform ist die Datenverbindung 14 von der ersten bidirektionalen Netzwerkschnittstelle 11 des ersten Gerätes über die erste Anschlusseinheit 21 mit der Bittübertragungsbaugruppe 23 der Terminierungseinheit 22 verbunden und wird dort terminiert. Die medien-unabhängige Schnittstelle der Bitübertragungsbaugruppe 23 ist dabei nicht beschaltet. Es kann somit kein Nutzdatenstrom von der Bitübertragungsbaugruppe 23 an das erste Gerät übermittelt werden. Die Bitübertragungsbaugruppe 23 ist fest auf einen Typ eines angeschlossenen Übertragungsmediums, über das die Datenverbindung 14 physikalisch übertragen wird, konfiguriert. So ist die Bitübertragungsbaugruppe 23 beispielweise derart konfiguriert, eine Datenverbindung entsprechend eines 10-Mbit oder eines 100-Mbit Übertragungsmediums gemäß dem Ethernet-Standard, aufzubauen. Die Konfiguration der Bitübertragungsbaugruppe 23 erfolgt beispielsweise über eine Mediensteuereinheit 25. Alternativ kann die Bitübertragungsbaugruppe 23 fest auf einen Typ des Übertragungsmediums konfiguriert sein und somit lediglich ein entsprechendes Übertragungsmedium unterstützen. Die Netzwerkschnittstelle 31 des zweiten Gerätes 30 wird dabei bevorzugt im promiskuitiven Modus, im Englischen auch "Promiscuous Mode" genannt, betrieben.

Der Nutzdatenstrom wird nun zwischen der ersten Anschlusseinheit 21 und der ersten Bitübertragungsbaugruppe 23 mit der Datenverbindung 14 unidirektional ausgekoppelt und über die zweite Anschlusseinheit 31 an die bidirektionale Netzwerkschnittstelle 31 des zweiten Gerätes 30 weitergegeben. Das zweite Gerät 30 kann die Daten beziehungsweise den Nutzdatenstrom beispielsweise über die zweite Netzwerkschnittstelle 32 an den Server 50 weiterleiten. Der Netzwerkadapter 20 kann insbesondere eine Datenverbindung 14 über Übertragungsmedien gemäß dem Ethernet-Standard mit 10 MBit/s oder 100 MBit/s Übertragungsrate terminieren.

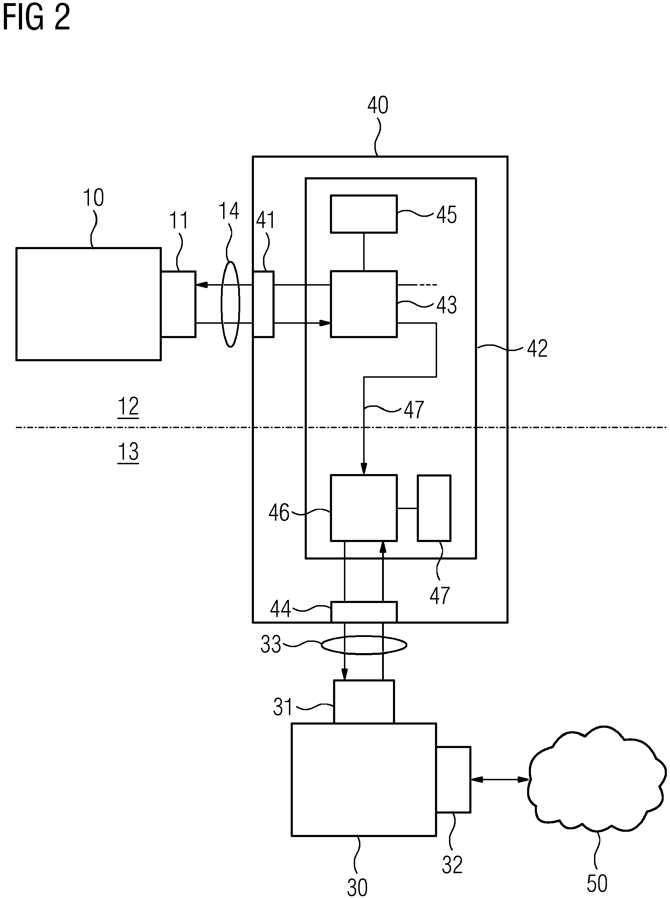

Figur 2 zeigt einen aktiven Abgriff des Nutzdatenstroms von der Datenverbindung 14. Der Netzwerkadapter 40 umfasst dabei eine erste Anschlusseinheit 41 sowie eine zweite Anschlusseinheit 44, die jeweils mit der bidirektionalen Netzwerkschnittstelle 11, 31 des ersten Geräts 10 beziehungsweise des zweiten Geräts 30 verbindbar sind. In der Terminierungseinheit 42 ist eine erste Bitübertragungsbaugruppe 43 angeordnet, die eine aktive bidirektionale Datenverbindung 14 mit der ersten Netzwerkschnittstelle 11 des ersten Geräts 10 unterhält und terminiert. Das erste Gerät 10 ist dabei der Sender des Nutzdatenstroms. Der Nutzdatenstrom wird über die medien-abhängige Schnittstelle in der Bitübertragungsbaugruppe 43 empfangen.

Die Terminierungseinheit 42 umfasst des Weiteren eine zweite Bitübertragungsbaugruppe 46, die über eine unidirektionale Datenverbindung 47 mit der medien-unabhängigen Schnittstelle der ersten Bitübertragungsbaugruppe 43 verbunden ist. Der Nutzdatenstrom wird von der ersten Bitübertragungsbaugruppe 43 über diese unidirektionale Datenverbindung 47 an die medien-unabhängige Schnittstelle der zweiten Bitübertragungsbaugruppe 46 weitergeleitet. Die medien-unabhängige Schnittstelle der ersten Bitübertragungsbaugruppe ist dabei so geschaltet, dass Daten nur in eine Richtung an die zweite Bitübertragungsbaugruppe 46 übertragen werden. Auf diese Weise wird sichergestellt, dass Daten lediglich aus der sicherheitskritischen Netzwerkzone 12 herausgeleitet werden können, allerdings keine Daten in das sicherheitskritische Netz 12 eingebracht werden können.

Die erste und die zweite Bitübertragungsbaugruppe 43, 46 sind bevorzugt mit jeweils einer Mediensteuerungseinheit 45, 47 verbunden, die jeweilige die Bitübertragungsbaugruppe 43, 46 konfiguriert. Die Mediensteuerungseinheit 45, 47 kann auch als eine einzige Mediensteuerungseinheit ausgebildet sein, die sowohl die erste als auch die zweite Bitübertragungsbaugruppe 43, 46 konfiguriert.

Zwischen der zweiten Bitübertragungsbaugruppe 46 und weiter über die zweiten Anschlusseinheit 44 besteht eine bidirektionale Datenverbindung 33 zur Netzwerkschnittstelle 31 des zweiten Geräts 30, das ein Empfänger der Datenverbindung bzw. des Nutzdatenstroms ist. In vorteilhafter Weise ist die bidirektionale Netzwerkschnittstelle 31 des zweiten Gerätes 30 im promiskuitiven Modus betrieben. Der von der zweiten Bitübertragungsbaugruppe 46 empfangene Nutzdatenstrom wird in der zweiten Datenverbindung 33 über die zweite Anschlusseinheit 44 an die Netzwerkschnittstelle 31 des zweiten Geräts 30 übermittelt. Das zweite Gerät 30 umfasst beispielsweise ein Cloud-Gateway und überträgt den gegebenenfalls aufbereiteten beziehungsweise gefilterten Nutzdatenstrom an das Cloud-System 50.

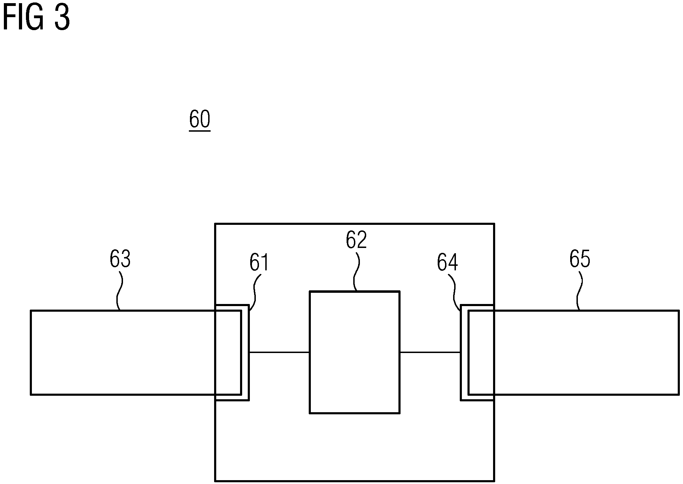

Figur 3 zeigt einen Netzwerkadapter 60 mit einer Terminierungseinheit 62 sowie einer ersten und zweiten Anschlusseinheit 61, 64 sowie zwei Übertragungsmedien 63, 65. Die erste und/oder zweite Anschlusseinheit 61, 64 des Netzwerkadapters 60 ist beispielsweise als Steckverbinder zum Anschluss eines Übertragungsmediums 63, 65 ausgebildet. Die Übertragungsmedien 63, 65 sind mit jeweils einer Anschlusseinheit lösbar verbindbar.

Der Netzwerkadapter 60 kann alternativ ein oder zwei Übertragungsmedien 63, 65 umfassen. Das eine und/oder zweite Übertragungsmedien 63, 65 ist dabei fest mit der ersten bzw. zweiten Anschlusseinheit 61, 64 verbunden. Die Übertragungsmedien 63, 65 sind beispielsweise Ethernet-Kabel. Des Weiteren kann lediglich eine Anschlusseinheit als Steckverbinder ausgebildet sein, die andere Anschlusseinheit kann fest mit einem Übertragungsmedium verbunden sein.

Gegenüber den bisher bekannten unidirektionalen Datenübertragungsvorrichtungen wie beispielsweise einem unidirektionalen Gateway ist bei dem vorliegenden Netzwerkadapter der Hardwareaufwand drastisch reduziert. Durch die verschiedenen Konfigurationsmöglichkeiten können unterschiedliche Übertragungsmedien unterstützt werden, insbesondere Übertragungsmedien entsprechend dem Ethernet-Standard IEEE 802.3. Durch den erfindungsgemäßen Netzwerkadapter können die Kosten für eine industrielle Datendiode erheblich reduziert werden. Der Netzwerkadapter kann mit bestehenden Geräten, sogenannten Brownfield-Geräten, als auch mit neuen Geräten eingesetzt werden.

Die in Figur 1 dargestellte und beschriebene Variante unterstützt einen rein passiven Abgriff von Daten. Sie ermöglicht somit die kostengünstige Realisierung sowohl als rückwirkungsfreier Netzwerk-Tap, als auch als unidirektionales Gateway, also als Datendiode für kritische Infrastrukturen.

Die in Figur 2 beschriebene zweite Variante des Netzwerkadapters unterstützt ferner Datenverbindungen über Übertragungsmedien mit 1 Gbit/s Übertragungsrate. Da der Abgriff der Daten aktiv erfolgt, ist diese Lösung zwar nicht rückwirkungsfrei im physikalischen Sinn. Allerdings ist diese Variante sehr gut für die kostengünstige Realisierung eines unidirektionalen Gateways mit dedizierten zusätzlichen Sender- und Empfängersystemen geeignet. Selbst im Falle eines Leistungsabfalls der Gateway-Strecke ist die Lösung rückwirkungsfrei aus Sicht des kritischen Netzwerks.

Alle beschrieben und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Netzwerkadapter (20, 40, 60) zur unidirektionalen Übertragung eines Nutzdatenstroms an eine bidirektionale Netzwerkschnittstelle, aufweisend
- eine erste Anschlusseinheit (21, 41, 61), die mit einer bidirektionalen Netzwerkschnittstelle (11) eines ersten Gerätes (10) physisch verbindbar ist,
- eine zweite Anschlusseinheit (24, 44, 64), die mit einer bidirektionalen Netzwerkschnittstelle (31) eines zweiten Gerätes (30) physisch verbindbar ist, und
- eine Terminierungseinheit (22, 42), die mindestens eine Bitübertragungsbaugruppe (23, 43) aufweist, und die derart konfiguriert ist, eine bidirektionale Datenverbindung (14) zur Netzwerkschnittstelle (11) des ersten Geräts (10) aufzubauen, den Nutzdatenstrom ausschließlich unidirektional über die Datenverbindung (14) vom ersten Gerät (10) zu empfangen und keinen Nutzdatenstrom an das erste Gerät (10) zu senden.

2. Netzwerkadapter nach Anspruch 1, wobei die Terminierungseinheit (22, 42) eine erste Bitübertragungsbaugruppe (23, 43) aufweist, die die bidirektionale Datenverbindung (14) in Bezug auf einen Bitübertragungsmodus terminiert und eine Medien-abhängige und eine Medien-unabhängige Schnittstelle aufweist.

3. Netzwerkadapter nach Anspruch 2, wobei lediglich die Medien-abhängige Schnittstelle bei einer ersten Bitübertragungsbaugruppe (23) beschaltet ist und die Medien-abhängige Schnittstelle derart konfiguriert ist, die Datenverbindung (14) entsprechend einem vorgegebenen Typ eines Übertragungsmediums zu terminieren.

4. Netzwerkadapter nach einem der Ansprüche 2 oder 3, wobei die Medien-unabhängige Schnittstelle der ersten Bitübertragungsbaugruppe (23) nicht beschaltet ist.

5. Netzwerkadapter nach einem der vorhergehenden Ansprüche, wobei der Nutzdatenstrom zwischen der ersten Anschlusseinheit (21) und der Terminierungseinheit (22) ausgekoppelt und an die zweite Anschlusseinheit (24) ausgegeben wird.

6. Netzwerkadapter nach Anspruch 2, wobei die Terminierungseinheit (42) die erste und eine zweite Bitübertragungsbaugruppe (43, 46) aufweist, wobei die erste Bitübertragungsbaugruppe (43) den Nutzdatenstrom unidirektional (47) an die zweite Bitübertragungsbaugruppe (46) übermittelt und die zweite Bitübertragungsbaugruppe (46) eine zweite Datenverbindung (33) zum zweiten Gerät (30) terminiert.

7. Netzwerkadapter nach Anspruch 6, wobei die erste Bitübertragungsbaugruppe (43) den Nutzdatenstrom über eine Medien-unabhängige Schnittstelle an die zweite Bitübertragungsbaugruppe (46) übermittelt.

8. Netzwerkadapter nach einem der Ansprüche 6 oder 7, wobei die erste Bitübertragungsbaugruppe (43) einen Typ eines Übertragungsmediums der bidirektionalen Datenverbindung (14) mit dem ersten Gerät (10) vereinbart.

9. Netzwerkadapter nach einem der Ansprüche 6 bis 8, wobei die zweite Bitübertragungsbaugruppe (46) einen Typ eines Übertragungsmediums der bidirektionalen Datenverbindung (33) mit dem zweiten Gerät vereinbart, und den in der zweiten Bitübertragungsbaugruppe (46) empfangenen Nutzdatenstrom an das zweite Gerät (30) weiterleitet.

10. Netzwerkadapter nach einem der Ansprüche 6 bis 9, wobei die zweite Bitübertragungsbaugruppe (46) derart konfiguriert ist, den Nutzdatenstrom von der ersten Bitübertragungsbaugruppe (43) auf der medien-unabhängigen Schnittstelle zu empfangen und den Nutzdatenstrom von der medien-unabhängigen Schnittstelle an die Netzwerkschnittstelle des zweiten Gerätes (30), bevorzugt in einem promiskuitiven Modus, zu übermitteln.

11. Netzwerkadapter nach einem der Ansprüche 2 bis 10 aufweisend eine Mediensteuerungseinheit (25, 45, 47), die die erste und/oder die zweite Bitübertragungsbaugruppe (23, 43, 46) zur Bereitstellung des vorgegebenen oder des vereinbarten Typs des Übertragungsmediums konfiguriert.

12. Netzwerkadapter nach einem der Ansprüche 1 bis 11, wobei die erste und zweite Anschlusseinheit (21, 24; 41, 44) als Steckverbinder zum Anschluss eines Übertragungsmediums ausgebildet sind.

13. Netzwerkadapter nach einem der Ansprüche 1 bis 11, umfassend mindestens ein Übertragungsmedium, das mit der ersten und/oder der zweiten Anschlusseinheit (21, 24; 41, 44) fest verbunden ist.

14. Netzwerkadapter nach einem der Ansprüche 2 bis 13, wobei die erste und/oder zweite Bitübertragungsbaugruppe (23, 43, 46) die bidirektionale Datenverbindung (14, 33) in Bezug auf den Bitübertragungsmodus entsprechend einem Ethernet-Standard terminiert.
